# EUROPEAN PATENT APPLICATION

(11) **EP 0 894 571 A1**
(43) Date of publication of application: **03.02.1999**
(21) Application number: 97403000.9
(22) Date of filing: 11.12.1997
(51) Int. Cl.: B24C 11/00, C09K 3/14

(54) **Blast material**

(30) Priority: 29.07.1997 JP 202969/97
(71) Applicant: JAPAN METALS & CHEMICALS CO., LTD., Tokyo 103 (JP)
(72) Inventor: Shibata, Mamoru, Nihonbashi, Chuoku, Tokyo (JP); Hatori, Motoharu, Nihonbashi, Chuoku, Tokyo (JP); Ichihara, Tadashi, Nihonbashi, Chuoku, Tokyo (JP); Matsuda, Toshitugu, Nihonbashi, Chuoku, Tokyo (JP)
(74) Representative: Uchida, Kenji

(57) **Abstract**

An abrasive having a high abrasion-cleaning speed and a small comsumption and producing no dust due to the powdering of the abrasive in preforming blast treatment is provided.

This abrasive is particulates obtained by quenching and solidifying a metal refining slag containing the oxides of Mg, Al and Si as the main components thereof, and comprises a mixture of 95∼20wt. % of shot-like particles having spherical or quasi-spherical, smooth surfaces with an average particle size of 0.1∼5mm and of 5∼80wt.% of square, grit-like particulates with an average particle size of 0.1∼2.5mm.

## Description

The present invention relates to a blast material , and more particularly, provides a blast material producing an extremely small amount of dust, having an exellent blast-cleaning efficiency (workability), and being advantageously used for improving an adhesive strength between paint and painted surface particularly in blast treatment performed before surface painting applied to ships, bridges, petroleum tanks, gates and the like.

Generally, in applying surface painting to steel materials such as oridinary steels, special steels. alloy steels and the like (hereafter referred to as "treated steel material"), a treatment for blasting a blast material to the surface of a steel material, the so-called "blast treatment" is performed before painting treatment thereof.

The main object of this blast treatment is to finish a surface to be painted to a predetermined surface roughness for improving the adhesive strength of the painting.

Another object of this blast treatment is to peel off and remove the oxidized layer, surface contaminants and old paint from the surface of said treated steel materials, and to form a clean surface suitable for painting. The removal performance of the blast treatment is usually judged according to the index of "Blast-Cleaning Efficiency".

Generally, it is said that there is a close relation between the "adhesive strength" and the "surface roughness" of a painted surface, and in order to improve the adhesive strength of the painting, it is desirable that the surface of a treated steel material has irregularities having a predetermined roughness. This is because the so-called anker effect is strengthened, and the adhesive strength is improved by giving the surface of the treated steel material such a surface roughness,

And therefore, conventionally, by performing said blast treatment and by giving the surface of the treated steel material a predetermined surface roughness, a considerably satisfactory adhesive strength of the painting has been obtained.

And, as the blast materials used in such blast treatments, sand, steel grit, steel shot, garnet, converter slag and the like are well-known,

Now, in performing the blast treatment of said treated materials using such blast materials, there have been problems that such a blst materials as sand, garnet or converter slag was crushed to powder by the impacts exerted when said blast materials was blasted to the surface of the treated materials, that dust was scattered all over the workshop, and that the environment in the workshop made it impossible to perform the blast treatment itself. Moreover, because visibility became poor due to dust produced by said blast materials, the blast- and cleaning was often performed unsuitably and unsufficiently, and therefore, in order to obtain a satisfactory anker effect or to remove old paint, the surface of the treated material had to be blasted repeatedly for a longtime. Thus, there were also disadvantages that not only it took much time for blast treatment but also that the consumption of the blast materials was increased.

With respect to this the inventors have proposed a blast material comprising shot-like (quasi-spherical) particulates obtained by quenching and solidifying the refining slag of high-carbon ferrochromium molten in the electric furnace (Japanese Patent Laid-Open No. 7-88770).

However, although this blast materials comprising only these shot-like particulates had advantages of producing little dust and of having an excellent corrosion resistance because they had particles of which surfaces were spherical and smooth, there remained still disadvantages that the blast-cleaning speed was lost and the consumption of the blast materials was increased according to the kind of paints and the shape of painted surfaces.

The object of present invention is to provide a blast material of which blast-cleaning speed is fast and of which consumption is small.

Another object of the present invention is to realize a lowered blast-cleaning cost by making the recycling of the blast materials practicable.

As a result of eager study for solving said problems contingent to the prior art, the inventors have come to the present invention comprising the following summarized contents.

That is, the present invention provides a blast material which is particulates containing the oxides of Mg, Al and Si as the main components thereof and which comprises mixed particles of 95∼20wt. % of shot-like particulates having spherical or quasi-spherical, smooth surfaces with an average particle size of 0.1∼5mm and of 5∼80wt. % of square, grit-like of particulates with an average particle size of 0. 1∼2.5mm.

In the present invention said particulates are preferably produced from the quenched and solidified metal refining slag.

In the present invention said particulates are preferably produced from the quenched and solidified slag of high-carbon ferrochromium refined in the electric furnace containing the oxides of Mg, Al, Si and Cr as the main components thereof, as well as a small amount of other oxides

In the present invention, said shot-like particulates are obtained by spraying or granulating the slag of high-carbon ferrochromium refined in the electric furnace, wherein in particular particles having smooth surfaces without edges, crushed surfaces or sharp surface defects are preferably used among the blasted ones.

In the present invention, said grit-like particulates are obtained by crushing the metal refining slag after spraying thereof, by crushing the metal refining slag after granulation thereof, by crushing the composite molten slag after spraying thereof, or by crushing the composite molten slag after granulation thereof, or alternatively, in a preferable example, they are obtained by crushing the refining slag of high-carbon ferrochromium after spraying thereof, by crushing and pelletizing the refining slag of high-carbon ferrochromium after granulation thereof, or by pelletizing the refining slag of high-carbon ferrochromium after being used for blast-cleaning treatment, wherein they have a particle shape with edges and fractured surfaces.

In a preferable example, the blast materials according to thepresent invention is characterized in using particulates of the metal refining slag containing the oxides of Mg, Al or Si as the main components thereof.

First, the reason for having directed our attention to the metal slag is, as described hereafter in detail, that the refining slag particles are advantageous in performing blast treatment for a short time because they are not liable to be fractured even if they would collide with the surface of the treated material during blast treatment, they have an inner structure producing no dust, and they are excellent in blast-cleaning efficiency.

Moreover, it has been also found that because they can also give some kinds of metals, for example chromium, corrosion resistance, even if a little, there are no concerns about the influences of rusting if there is a time interval till painting, and the process control of painting can be easily performed.

In the present invention, as such a blast material , in particular among the oxides refining slags, the solid of molten slag formed as a by-product in producing high-carbon ferrochromium by melting it in the electric furnace, and above all, the slag quenched and solidified after spraying or granulation and the particulates obtained by crushing the slag are mainly used. An example of the composition thereof is shown in Table 1.

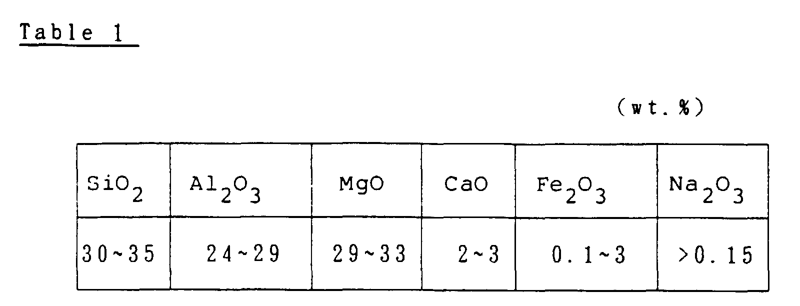

In the present invention, the reason for having directed our attention in particular to the refining slag of high-carbon chromium among said refining slags is that this refining slag is hard and not liable to be fractured because it contains the oxides of Mg, Al, Si and Cr, and that it also contains a spinell structure comprising mainly the oxides of Mg and Al as well as a glass component. That is, in performing blast treatment, such a refining slag becomes no fine powder but relatively large particles and produces no dust because it is fractured intercrystallinely even if it would be fractured due to the impact exerted by colliding with the surface of the treated material.

Moreover, because this refining slag is very hard and tough, it also has an advantage of forming a suitable anker on the surface of the treated material. Further, when this blast materials is blasted intensively against the surface of the treated steel material, it is bonded mechanically with Fe of the surface of the steel material or sometimes reacts therewith, and forms an oxide penetration layer just like an alloy layer. Still more, this oxide penetration layer is not easily peeled off and exists as the so-called modifying layer of the surface of the steel material.

Moreover, among said refining slags of high-carbon ferrochromium, the blast material according to the present invention comprises a mixture of :
① the particulates obtained by spraying wherein a molten slag is sprayed in the air or crushed using a granulation nozzle; that is, the shot-like particulates having a smooth surface as well as a spherical or quasi-spherical particle shape (A);
② the square, grit-like crushed particulates of a slag having edges and fractured surfaces and obtained by crushing and pelletizing said refining slag after spraying or granulation thereof (B) ; and
③ the square, grit-like crushed particulates of a refining slag having edges and fractured surfaces and obtained by pelletizing the particulates used more than once for blast-cleaning (B').

In the present invent ion, the first reason for selecting said particulates (A), (B) and (B') among the refining slags and mixing them is that the peeling off of paint may be sometimes difficult only by shooting the shot-like particulates (A) according to the kind of paint, the deterioration degree of paint, the remaining film thickness of paint or the shape of a painted surface, and that the addition of the grit-like particulates is advantageous in order to overcome this disadvantage.

The second reason therefor is that this particulate has an extremely high collision energy when having collided with the treated steel material, and that it can easily form a surface modifying layer comprising a quasi-alloyed surface penetration layer with the oxides of Mg, Al, Si and Cr being reacted with Fe adjacent the surface of the treated steel material.

Moreover, in the abrasive according to the present invention, the weight mixing ratio of said shot-like particulates (A) to said grit-like particulates (B, B'), that is, A to (B, B'), shall be in the range of 95∼20 to 5∼80. The reason therefor is that if the ratio of the grit-like particulates is less than 5wt. %, the blast-cleaning efficiency is low, the time for blast-cleaning becomes longer and the consumption of the blast materials increases, and that if the mixing ratio thereof exceeds 80wt.%, not only a predetermined surface roughness can not be obtained, but also a normal blast-cleaned surface can not be obtained due to the blast materials stuck in the blast-cleaned surface. Further, it is also undesireble that the mixing ratio of the shot-like particulates is out of said range because it causes a lowered blast-cleaning speed resulting in a lowered blast-cleaning efficiency,

Now, in the present invention, by using said refining slag containing the oxides of Mg, Al, Si and Cr the advantages of the present invention can be achieved, however, it goes without saying that such advantages of the present invention can be achieved by using not only the refining slags of high-carbon ferrochromium but also the particulates obtained by quenching and solidifying (spraying, granulating) a composite molten slag produced separately from a composition containing similar components in the electric furnace.

Moreover, said refining slag of high-carbon ferrochromium containing 20∼40wt.% of Al₂O₃, 20∼40wt. % of MgO, 25∼45wt. % of SiO₂ and 0.5∼5wt.% of Cr₂O₃ as the main components thereof, as well as a small amount of oxides as the rest thereof is used. The reason for limiting the composition of this slag to said range is as follows.

First, it is because the slag of this composition produces only a little amount of dust, improves the adhesive strength between paint and painted surface in painting and has a high blast-cleaning efficiency that the composition of Al₂O₃, MgO and SiO₂ is limited to said range.

Further, in the present invention, various particulates of the electric furnace refining slag is used, but it is required to condition the particles thereof to a suitable particle size. That is, the particulates having an average particle size of 0.1∼2.5mm as a suitable particle size are used. If the lower limit particle size of the particulates is less than 0.1mm, they are not fractured, but behave themselves as if they were blown up like dust due to the small particle size thereof. On the other hand, if the upper limit particle size of the particulates exceeds 2.5mm, they become rather liable to be fractured and the powdering ratio thereof becomes higher. And therefore, as the blast materials according to the present invention, the one having a particle size of 0.1∼2.5mm must be used.

In the present invent ion, said grit-like particulates are not limited to the electric refining slag of high-carbon ferrochromium, but it goes without saying that particulates obtained by grinding, for example, steel-making slag, electric furnace slag and the like mechanically may be also used.

Hereafter, an embodiment of the present invention is described:
(1) The spherical and quasi-spherical shot-like particulates [A] having a particle size of 0.2∼5mm obtained by accomodating a molten slag as a by-product in the refining process of high-carbon ferrochromium in a ladle, spraying it in the air and quenching it as well as the mixture [B] of the shot-like particulates and the grit-like particulates crushed to a particle size of 0.2~2.5mm were used as the test blast materials.
(2) Then, to a pure water tank made of general structural soft steel material (SS 400) (having a 800µm thick film of glass cross primer) as a treated material, a blast treatment by means of said blast materials [A] and [B] was applied using a normal direct-pressure type blast treatment apparatus (having a nozzle diameter of 10mm and a nozzle tip air pressure of 6.0kg/cm² ) so as to be finished to a substrate conditioning rank of ISO Sa 2.5. The results thereof are shown in Table 2. 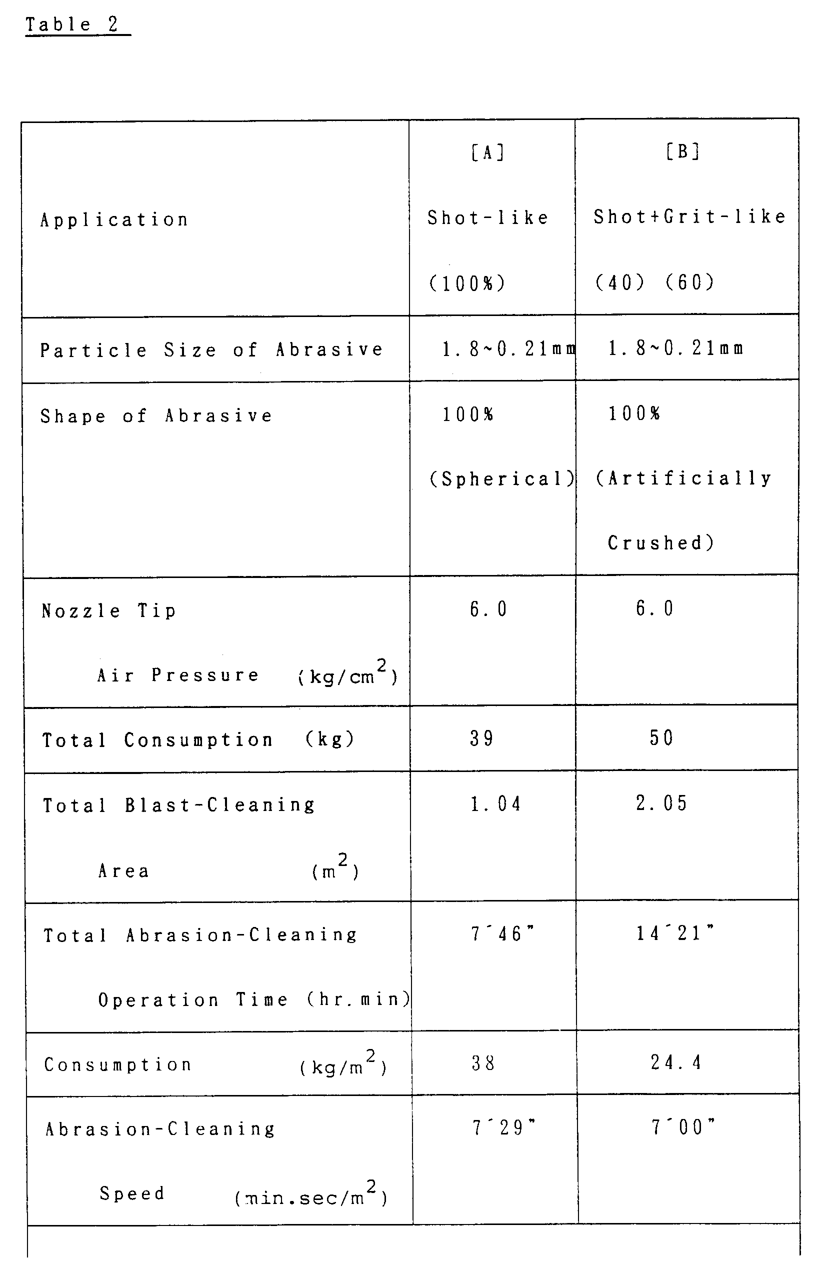 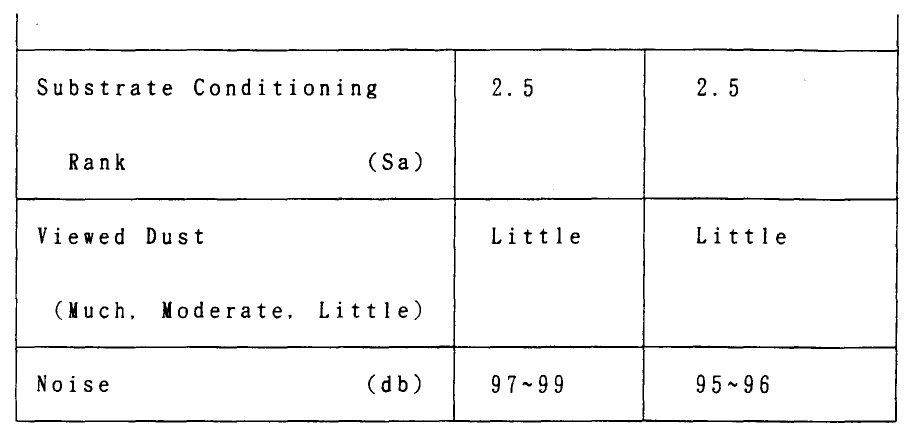
(3) Moreover, Table 3 shows an example of applying a blast-cleaning to the surface of a tanker (having a remaining paint film thickness of 800µm). As the blast materials according to the present invention, the blast material [B] used in (1) was used, and as comparative examples, blast treatment was performed using steel-making slag and garnet. As a result thereof, it was found that the blast materials of the present invention (1) and (2) exhibited better results with respect to both consumption and blast-cleaning speed in comparison with the other comparative examples, and that a higher blast-cleaning efficiency could be obtained. 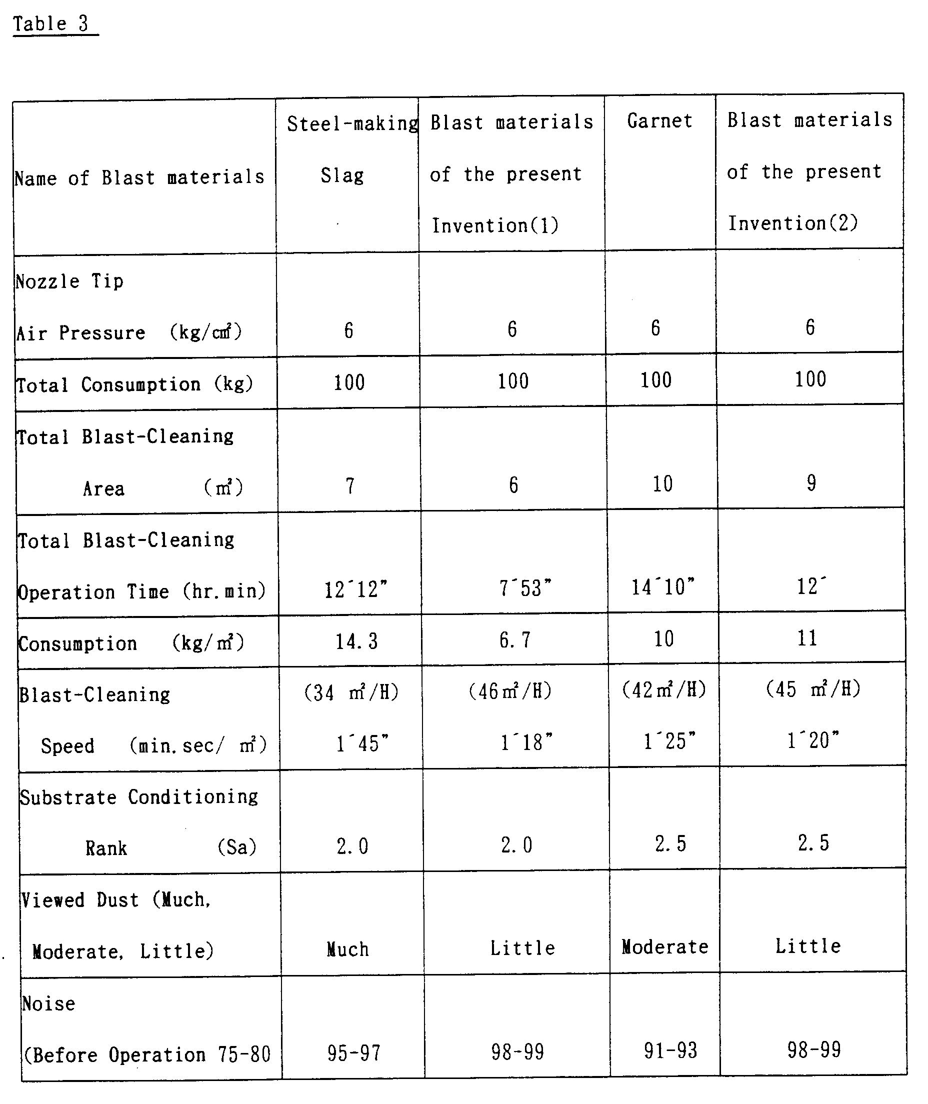 (4) Moreover, Table 4 shows an example of having performed an blast-cleaning of the surface of a petroleum tank (remaining paint film thickness of 700µm). The blast-cleaning efficiency indicated in consumption and blast-cleaning speed exhibited a higher value in using the mixture [B] of shot- and grit-like particulates than in using the shot-like particulates [A], and the advantages of the present invention were confirmed.

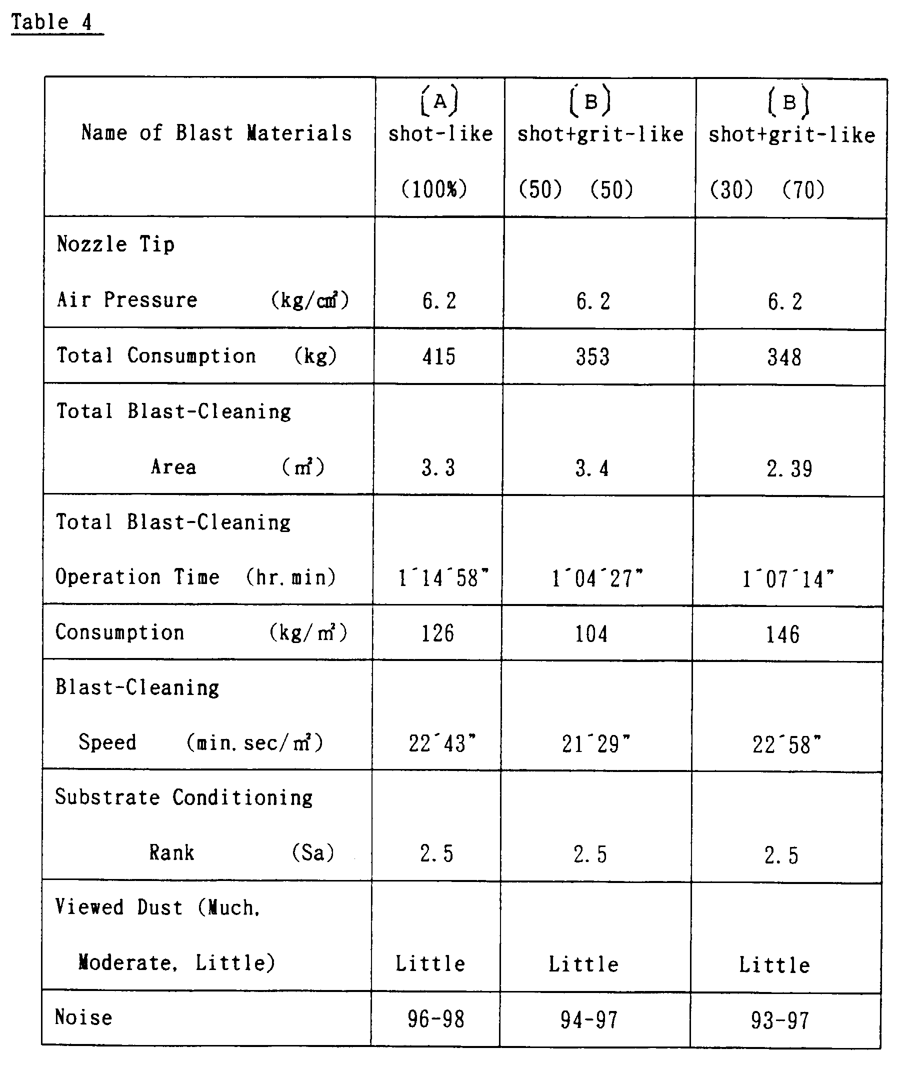

As described above, the blast material according to the present invention has an excellent balst-cleaning efficiency, produces an extremely small amount of dust, and exhibits an excellent workability.

Moreover, because the blast material according to the present invention is able to be recycled and reused, the blast cost can be reduced..

## Claims

1. A blast material which consists essentially of particulates containing the oxides of Mg, Al and Si as the main components thereof, and comprises a mixture of 95 - 20 wt % of shot-like particles having a smooth, spherical or quasi-spherical surface with an average particle size of 0,1 - 5 mm and 5 - 80 wt % of grit-like square particulates with an average particle size of 0.1 - 2.5 mm.

2. The blast material as described in claim 1 wherein said particulates are the ones obtained by quenching and solidifying a metal refining slag.

3. The blast material as described in claim 1 wherein said particulates are the ones obtained by quenching and solidifying an electric furnace refining slag of high-carbon ferrochromium containing the oxides of Mg,Al,Si, and Cr as well as a small amount of other oxides.

4. The blast material as described in one of claims 1-3 wherein said shot-like particulates are obtained by spraying or granulating the electric furnace refining slag of high-carbon ferrochromium, and are particles having smooth surfaces without edges, crushed surfaces or sharp surface defects.

5. The blast material as described in one of claims 1-3 wherein said grit-like particulates are obtained by crushing and pelletiziang the refining slag of high-carbon ferrochromium after spraying or granulation thereof, or by pelletizing the refining slag of high-carbon ferrochromium after being used for blast-cleaning treatment, and they have a particle shape with edges and fractured surfaces.
